# EUROPÄISCHE PATENTANMELDUNG

(11) **EP 0 896 338 A1**
(43) Veröffentlichungstag der Anmeldung: **10.02.1999**
(21) Anmeldenummer: 98114759.8
(22) Anmeldetag: 05.08.1998
(51) Int. Cl.: G11B 33/04

(54) **CD-Verpackung**

(30) Priorität: 06.08.1997 DE 19734060
(71) Anmelder: Karl Bock GmbH & Co., 78730 Lauterbach (DE)
(72) Erfinder: Lockie, Trevor, By-Lairg, Sutherland IV27 4NW (GB)
(74) Vertreter: Müller-Boré & Partner Patentanwälte

(57) **Zusammenfassung**

Die Erfindung betrifft einen Aufbewahrungsbehälter für scheibenförmige Gegenstände, insbesondere Compact-Discs, CD-ROM, Bildplatten oder andere scheibenförmige, optische oder magnetische Datenträger mit zwei gegenüberliegenden biegesteifen Wandteilen (2, 26), die entlang der Ränder miteinander verbunden sind und wenigstens eine Einschub- und Entnahmeschlitzöffnung (6) für eine Scheibe aufweisen, wobei die Wandteile (2, 26) eine Kammer bilden, deren Höhe der Dicke der Scheibe und gegebenenfalls einer zusätzlichen Informationsbroschüre entspricht und deren Längs- und Querabmessungen den Abmaßen der Scheibe und der Broschüre angepaßt sind, und die Schlitzöffnung (6) bei ihrer Ausrichtung nach unten ein Herausgleiten der Scheibe aus dem Behälter zuläßt, und einer Haltevorrichtung zum Festhalten der Scheibe im Behälter in Form wenigstens einer Wippe (8), die an einem der Wandteile (2, 26) schwenkbar angeordnet ist und in ihrer Ruhestellung mit wenigstens einem Halteteil (18, 20) die Scheibe in dem Behälter so fixiert, daß dieser aus der Schlitzöffnung (6) nicht austreten kann, und in ihrer verschwenkten Stellung die Scheibe freigibt.

## Beschreibung

Die vorliegende Erfindung bezieht sich auf einen Aufbewahrungsbehälter für scheibenförmige Gegenstände, insbesondere` Compact-Discs, CD-ROM, Bildplatten oder andere scheibenförmige optische oder magnetische Datenträger.

Bislang wurden derartige scheibenförmige Gegenststände, insbesondere Datenträger wie Compact-Discs üblicherweise in Kunststoffklappboxen aufbewahrt. Diese Klappboxen weisen einen Klappdeckel auf, der mittels Kunststoffstiften an einem zweiten Gehäuseteil beweglich gelagert ist. Unter dem Klappdeckel liegt in einer Ausnehmung der Datenträger, der in seinem Mittelloch durch kreisförmig angeordnete Halteklammern festgeklemmt wird. Zum Entnehmen des Datenträgers muß dieser nach dem Aufklappen des Deckels an seinen Rändern ergriffen werden und gleichzeitig müssen die Halteklammern niedergedrückt werden, um den Datenträger leicht entnehmen zu können. Dieser Entnahmevorgang ist recht umständlich und zeitintensiv. Weiterhin neigen die drehbaren Lagerungen des Klappdeckels in Form von Kunststoffstiften bei einem leicht möglichen Verklemmen oder Verkanten des Deckels dazu, sehr schnell abzubrechen. Aufbewahrungsbehälter dieser Art bestehen häufig aus drei Spritzgußteilen aus Kunststoff, so daß zumindest zwei Montagevorgänge zum Zusammensetzen der Teile erforderlich sind.

Die WO 94/25376 zeigt eine weitere Ausführungsform des zuvor beschriebenen Aufbewahrungsbehälters für scheibenförmige Datenträger, insbesondere Compact Discs. Hier ist zusätzlich ein Schwenkarm angebracht, der die kreisförmig angeordneten Halteklammern, welche die Compact-Disc halten, trägt. Dieser Haltearm hebt bei Betätigung die CD an, um deren Ergreifen am Rand zu erleichtern, doch das Festhalten der CD und das gleichzeitige Lösen der Halteklammern ist weiterhin erforderlich. Diese Behälterart erfordert zusätzliche Einzelteile, was neben den höheren Fertigungskosten insbesondere aufgrund des höheren Montageaufwandes zu höheren Herstellungskosten führt. Weiterhin ergeben sich aus einer größeren Anzahl beweglicher Einzelteile, wie hier der Schwenkarm, zusätzliche Fehlerquellen und Schwachpunkte. Insbesondere Lagerungen aus Kunststoff neigen beim Verkanten oder Verklemmen der beweglichen Teile häufig zum Ausbrechen.

Weiterhin sind Aufbewahrungsbehälter für Compact-Discs in Form einer aus Karton gefalteten Hülle bekannt. Diese Hüllen quadratischen Formats sind an drei der vier Seiten fest verschlossen, während die vierte Seite einen Einschubschlitz bildet, durch den die Compact-Disc in die Hülle eingeschoben wird. Der Einschubschlitz kann durch einen umklappbaren Kartondeckel verschlossen werden. Die Entnahme der CD aus einer solchen Hülle ist jedoch ebenfalls recht umständlich, da zunächst der Kartondeckel zurückgeklappt und dann die CD aus der Hülle entnommen werden muß. Dabei klemmt die CD leicht in der Hülle fest, da diese zu ihrem Rand hin aufgrund der Kartonfalze enger wird und außerdem die häufig rauhe Kartonoberfläche einem leichten Entgleiten der CD aus der Hülle zusätzlich verhindert. Weiterhin ist diese Art der Verpackung biegsam und weniger haltbar als eine Kunststoffbox, was sich insbesondere beim Transport, wie z.B. im Auto nachteilig auswirkt.

Die WO 91/17933, WO 95/05661 und WO 93/02949 zeigen Aufbewahrungsbehälter für scheibenförmige Datenträger, bei denen der Datenträger durch eine seitliche Öffnung flach in den Behälter eingeschoben wird. Der Datenträger wird hier auf einem Schlitten geführt, der über einen Hebel bewegt wird, oder direkt über einen Hebelmechanismus ausgeschoben. Die Entnahme des Datenträgers aus einem solchen Behälter ist ebenfalls recht umständlich, da zum einen der Behälter festgehalten werden muß, gleichzeitig der Hebel bewegt und der Datenträger mit der Hand aufgenommen werden muß. Weiterhin ist eine Vielzahl zum Teil beweglich miteinander verbundener Einzelteile erforderlich, was zu hohen Herstellungskosten führt. Auch ergeben sich aus einer Vielzahl mechanisch zusammenwirkender Einzelteile schnell Möglichkeiten eines Defekts. Zusätzlich führen die Hebelmechanismen zu einer größeren Bauform und hervorstehende Hebel sind zum platzsparenden Stapeln der Behälter hinderlich.

Aufgabe der Erfindung ist es daher einen einfach zu handhabenden, platzsparend zu lagernden, biegefesten und kostengünstig herzustellenden Aufbewahrungsbehälter für scheibenförmige Gegenstände, insbesondere Compact-Discs, Bildplatten oder andere scheibenförmige, optische oder magnetische Datenträger zu schaffen, welcher zudem zuverlässig funktioniert, sehr haltbar ist und eine Scheibe sicher verwahrt.

Erfindungsgemäß wird diese Aufgabe durch die Merkmale des Anspruchs 1 gelöst. Vorteilhafte Ausführungsformen ergeben sich aus den Unteransprüchen.

Der erfindungsgemäße Aufnahmebehälter bietet durch seine biegesteifen Wandteile eine sehr stabile Umhüllung für einen scheibenförmigen Gegenstand. Bei diesem Gegenstand kann es sich insbesondere um einen scheibenförmigen Datenträger, wie beispielsweise eine CD oder Bildplatte, handeln. Der erfindungsgemäße Aufbewahrungsbehälter kann aber in einer entsprechenden Ausführungsform beispielsweise auch zum Verwahren von Schleifscheiben, Trennscheiben oder Kreissägeblättern verwendet werden. Die stabile Umhüllung gewährleistet zum einen einen guten Schutz der innenliegenden Scheibe und bringt zum anderen eine große Haltbarkeit des Aufbewahrungsbehälters. Dies ist insbesondere beim Transport des Aufbewahrungsbehälters mit einem Datenträger, wie er zum Beispiel bei der Verwendung von tragbaren Aufnahme- und Abspielgeräten oder bei Verwendung im Auto erforderlich ist, von Vorteil. Die Haltbarkeit wird weiterhin dadurch erhöht, daß an dem erfindungsgemäßen Aufbewahrungsbehälter kein Klappdeckel oder sonstige bewegliche Behälterabdeckungen, die ein Entnehmen der Scheibe ermöglichen, erforderlich sind. Dies verringert die Anzahl der beweglichen bzw. mechanisch zusammenwirkenden Komponenten, wodurch eine geringere Verschleißanfälligkeit und Fehlerwahrscheinlichkeit erreicht wird.

Der erfindungsgemäße Aufbewahrungsbehälter erlaubt eine äußerst einfache Handhabung, da zum Einlegen und Entnehmen der Scheibe der Aufbewahrungsbehälter nicht zuerst geöffnet werden muß. Die Scheibe wird vielmehr einfach in die Schlitzöffnung eingeschoben und kann aus dieser auch sehr einfach wieder entnommen werden. Ein unbeabsichtigtes Entgleiten der Scheibe aus dem Behälter wird durch eine schwenkbare Wippe, die mit einem Halteteil die Scheibe in dem Aufbewahrungsbehälter festhält, sicher verhindert, solange die Wippe nicht betätigt wird. Vor dem Entnehmen der Scheibe muß daher lediglich die Wippe verschwenkt werden und der Aufbewahrungsbehälter mit der Schlitzöffnung schräg nach unten gehalten werden, damit die Scheibe aus dem Aufnahmebehälter herausrutschen kann. Dieses Herausrutschen geschieht allein durch die auf die Scheibe wirkende Schwerkraft, wodurch ein äußerst einfacher Entnahmevorgang erzielt wird.

Der Aufbewahrungsbehälter kann so gestaltet sein, daß er zusätzlich zu der Scheibe eine Informationsbroschüre bzw. Booklet aufnehmen kann. Solch ein Booklet wird insbesondere Compact-Discs häufig beigelegt, um weitere Informationen zum Inhalt der Compact-Disc und zu den Interpreten zu geben sowie um Vermarktungsprodukte anzubieten. Bei Verwendung des Aufbewahrungsbehälters für eine Schleif- oder Trennscheibe können so zum Beispiel Informationen über Einsatzgebiet und Schnittparameter beigelegt werden. Diese Informationsbroschüre kann wie auch die Scheibe äußerst einfach durch die Schlitzöffnung in den Aufbewahrungsbehälter eingeschoben und auch wieder entnommen werden, was durch zusätzliche Aussparungen an den Längskanten der Schlitzöffnung erleichtert werden kann. Da die Informationsbroschüre unterhalb der Scheibe in dem Aufbewahrungsbehälter liegt, bietet sie einen zusätzlichen Schutz gegen Zerkratzen der Scheibe, insbesondere eines Datenträgers, wenn dieser in den Aufbewahrungsbehälter eingeschoben wird.

Wenn einem Verkratzen einer Scheibe, vor allem eines besonders empfindlichen Datenträgers beim Einschieben in und beim Entnehmen aus dem Aufbewahrungsbehälter weiter vorgebeugt werden soll, insbesondere wenn keine Broschüre vorgesehen ist, können die Innenflächen und Kanten des Aufbewahrungsbehälters besonders behandelt oder beschichtet werden. Insbesondere können die Kanten der Schlitzöffnung besonders glatt und abgerundet ausgeführt werden.

Weiterhin ist der erfindungsgemäße Aufbewahrungsbehälter im wesentlichen nur um die Stärke der Wandteile dicker als der Datenträger und die eventuell beiliegende Informationsbroschüre, wodurch eine äußerst platzsparende Lagerung ermöglicht wird.

In einer bevorzugten Ausführungsform ist die Wippe so gestaltet, daß ein Arm der Wippe als Haltearm an seinem Ende das Halteteil trägt, während der andere gegenüberliegende Wippenarm als Betätigungsarm zum Verschwenken der Wippe 8 ausgebildet ist. Diese Gestaltung ermöglicht eine äußerst einfache Betätigung der Wippe, um eine Schwenkbewegung zur Freigabe der Scheibe zu erzielen. Durch einfachen Druck auf den Betätigungsarm schwenkt die Wippe, d.h. der andere Wippenarm, der Haltearm bewegt sich in die entgegengesetzte Richtung, hebt sich an, und löst so das an ihm angebrachte Halteteil von der Scheibe, wodurch deren Entnahme aus dem Aufbewahrungsbehälter möglich wird. Bei dieser Bauform ist es möglich, den Betätigungsarm großflächig in Form einer Drucktaste auszugestalten und griffgünstig am Rand der Außenseite des Aufbewahrungsbehälters anzuordnen, wodurch eine äußerst einfache Handhabung des Aufbewahrungsbehälters erreicht wird.

Vorteilhafter Weise ist bei dem erfindungsgemäßen Aufbewahrungsbehälter die Verbindung der beiden Wandteile entlang ihrer Ränder durch seitliche Kanten vorgesehen, die mit wenigstens einem der Wandteile einstückig hergestellt und mit dem anderen Wandteil nachträglich verbunden worden sind. Dies ermöglicht eine kostengünstige Herstellung des Aufnahmebehälters, da die beiden Wandteile vorteilhafter Weise jeweils mit einem Teil der sie beabstandenden und verbindenden Kanten einstückig gefertigt werden. Beispielsweise können die beiden Wandteile aus Kunststoff im Spritzgußverfahren äußerst preisgünstig gefertigt werden. Die beiden Teile können dann an ihren seitlichen Kanten miteinander verbunden werden. Dies kann durch verschiedenste Verbindungstechniken geschehen. So können die beiden Wandteile beispielsweise über an ihnen vorgesehene Rasteinrichtungen miteinander verrastet werden. Dies ist eine sehr günstige Verbindungsmethode, da die Rastverbindungen mit den Wandteilen beispielsweise im Spritzguß einteilig gefertigt werden können und eine Montage durch Verrasten sehr einfach durchzuführen ist. Weiterhin ist aber auch eine Verbindung der Wandteile durch Verkleben, Verschweißen, Verschrauben oder Vernieten denkbar. Auch müssen die Wandteile nicht als Spritzgußteile aus Kunststoff gefertigt sein, beispielsweise können die Wandteile auch durch Umformen aus Metallblech gefertigt werden.

In einer bevorzugten Ausführungsform entspricht die Höhe der Schlitzöffnung des Aufbewahrungsbehälters zumindest der Dicke der Scheibe oder gegebenenfalls der Broschüre, falls diese dicker als die Scheibe ist. Diese Ausgestaltung ermöglicht, daß zum Einschieben bzw. Entnehmen der Scheibe keine klappbaren oder in anderer Weise beweglichen Teile des Aufbewahrungsbehälters geöffnet werden müssen. Dies ist auch zum Einschieben und Entnehmen der Broschüre nicht erforderlich, da diese, wenn die Schlitzöffnung eine genügende Höhe aufweist, ebenfalls durch die Schlitzöffnung sehr einfach eingeschoben oder entnommen werden kann, zumindest wenn die Scheibe sich nicht im Aufbewahrungsbehälter befindet. Dies vereinfacht sowohl die Handhabung als auch die Bauform des Aufbewahrungsbehälters in Hinblick auf eine kostengünstige Herstellung und eine große Haltbarkeit.

In einer weiter bevorzugten Ausführungsform des Aufbewahrungsbehälters sind wenigstens im Bereich eines der Enden der Schlitzöffnung Stege vorgesehen, die die Broschüre bei eingeschobener Scheibe zurückhalten und bei entnommener Scheibe freigeben. Diese Stege sind so gestaltet, daR der über ihnen verbleibende Teil der Schlitzöffnung nicht groß genug ist, um die Scheibe und die Broschüre gemeinsam durchzulassen, beide einzeln jedoch die Schlitzöffnung passieren können. Da nun die Scheibe in dem Aufbewahrungsbehälter durch die Wippe mit dem Halteteil fixiert ist, ist somit eine Entnahme bzw. ein Herausrutschen der unter der Scheibe liegenden Broschüre bei eingeschobener Scheibe nicht möglich, da sie von den Stegen zurückgehalten wird. Ist die Scheibe jedoch aus dem Aufbewahrungsbehälter entnommen, kann auch die Broschüre entnommen werden, indem sie über die Stege durch den verbleibenden Spalt der Schlitzöffnung entnommen wird. Somit wird auch die Broschüre sicher in dem Aufbewahrungsbehälter gehalten und kann nicht versehentlich herausrutschen.

Weiter bevorzugt weist das Halteteil am Haltearm einen hinter eine Kante der Scheibe greifenden Haltevorsprung auf, der in seiner von der Kante abgelegenen Richtung in eine Gleitrampe übergeht, welche in Einschubrichtung für die Scheibe ansteigt. Ein solcher Haltevorsprung greift nach Art eines Hakens mit seiner scharfen bzw. steilen und hohen Kante hinter eine Kante der Scheibe und hält diese auf diese Weise fest. Ausgehend von dieser steilen, hohen Kante fällt der Haltevorsprung zu seinem anderen Ende hin in Form einer Rampe ab. Dies bewirkt, daß die Scheibe beim Einschieben gegen die Schräge des Haltevorsprungs trifft und über diese hinweggleitet, wobei der Haltevorsprung mit dem Haltearm zurückgedrückt wird. Sobald die Scheibe bis zu einer Kante vollständig über die Schräge hinwegbewegt ist, gelangt die Kante der Scheibe hinter die scharfe Kante des Haltevorsprungs und verhakt sich dort, da die Scheibe in der anderen Richtung mangels einer Anschrägung den Haltevorsprung nicht zurückdrücken kann. Dies ermöglicht ein einfaches Einschieben der Scheibe und gleichzeitig ein sicheres Festhalten der Scheibe in dem Aufbewahrungsbehälter.

Vorzugsweise schwenkt bei dem erfindungsgemäßen Aufbewahrungsbehälter die Wippe um eine Schwenkachse, die sich rechtwinklig zur Wippenlängsachse erstreckt. Durch diese Anordnung ist ein leichtes Verschwenken der Wippe gewährleistet, die am Betätigungsarm eingeleitete Bewegung wird direkt auf den Haltearm übertragen.

In einer weiteren bevorzugten Ausführungsform des Aufbewahrungsbehälters, wird die Ruhestellung der Wippe durch Federkraft festgelegt. Die Wippe wird durch die Federkraft in ihrer Ruhestellung gehalten, so daß sichergestellt ist, daß die Scheibe zuverlässig festgehalten wird. Ein unbeabsichtigtes Verschwenken der Wippe ohne deutlichen Druck auf den Betätigungsarm, beispielsweise durch Erschütterungen oder Stöße, ist somit ausgeschlossen.

Vorteilhafter Weise ist die Wippe in ihrer Ruhestellung kraftfrei und aus dieser gegen eine Federkraft herausbewegbar. Dies bedeutet, daß die Federkraft erst beim Verschwenken der Wippe aus der Ruhelage aufgebaut wird. In der verschwenkten Lage ist die Federkraft dann bestrebt, die Wippe wieder zurück in ihre Ruhelage zu bringen. Damit ist sichergestellt, daß die Wippe automatisch immer wieder in ihre Ruhelage, in der sie die Scheibe mit dem Halteteil festhält, zurückkehrt. Es wird dadurch automatisch eine zuverlässige Sicherung der Scheibe in dem Aufbewahrungsbehälter erzielt. Die in ihrer Ruhelage kraftfreie Wippe führt zu dem Vorteil, daß insgesamt die beim Verschwenken auftretenden Federkräfte geringer sind, was ein leichteres Einschieben und Entnehmen der Scheibe ermöglicht und gleichzeitig die durch die Kräfte bedingte Belastung der Behälterteile minimiert. Die Federkraft kann durch separate Federn aufgebracht werden, wird aber vorteilhafterweise durch die Elastizität des Materials der Wippenlagerung aufgebaut. Dies erspart zusätzliche Bauteile, wodurch die Fertigungskosten verringert werden.

Weiter bevorzugt ist eine Ausführungsform des Aufbewahrungsbehälters, bei der die Wippe in einem der beiden Wandteile als Teil von diesem ausgebildet ist, in welchem die beiden Wippenarme durch Trennschlitze von benachbarten Wandteilabschnitten getrennt sind, während die Schwenkanordnung der Wippe einstückig mit dem Wandteil ausgebildet ist. Diese Bauform ermöglicht eine sehr kompakte bzw. flache Gestalt des Aufbewahrungsbehälters, da die Wippe vollständig in einem der Wandteile liegt. Weiterhin wird eine äußerst kostengünstige Fertigung erreicht, da die gesamte Wippe mit dem Wandteil in einem Stück, beispielsweise durch Spritzgießen gefertigt werden kann. Die Anzahl von Einzelteilen und die dadurch bedingten Montagevorgänge sind auf ein Minimum reduziert. Die beiden Wippenarme werden durch Trennschlitze von den umliegenden Wandteilbereichen getrennt, während der die beiden Wippenarme verbindende Bereich der Schwenkanordnung einstückig, fest mit dem Wandteil verbunden und somit Teil desselben ist. Eine Federwirkung der Wippe wird hier beispielsweise durch die Elastizität des Materials, aus dem die Schwenkanordnung und somit das gesamte Wandteil einschließlich der Wippe gefertigt ist, erreicht. Bei Auslenkung der Wippe kommt es zur elastischen Verformung des Werkstoffes, die die Federwirkung erzeugt. Auch wenn das Wandteil einschließlich der Wippe vorteilhafterweise einstückig aus Kunststoff gefertigt ist, so ist doch die Verwendung anderer Werkstoffe denkbar. Beispielsweise kann das Wandteil einschließlich der Wippe auch einstückig aus einem entsprechend biegefesten Material wie Metall, z.B. durch Umformen aus einem Blech, gefertigt werden.

In einer bevorzugten Ausführungsform des erfindungsgemäßen Aufbewahrungsbehälters sind die Wippenarmlängen, der Abstand zwischen den Wippenarmen einerseits und dem gegenüberliegenden Wandteil andererseits und die Höhe des Haltevorsprungs so bemessen, daß beim Niederdrücken des Betätigungsarmes die Scheibe sicher freigegeben wird. Die Hebelverhältnisse der Wippenarme sind somit so gewählt, daß ein Niederdrücken des Betätigungsarmes ein vollständiges Lösen des Haltevorsprungs von der Kante der Scheibe bewirkt, so daß die Scheibe aus dem Aufbewahrungsbehälter entnommen werden bzw. aus diesem entgleiten kann. Hierdurch wird erreicht, daß durch einen einfachen Druck auf den Betätigungsarm die Scheibe vollständig freigegeben wird. Es wird somit eine sehr bequeme Handhabung des Aufbewahrungsbehälters erzielt.

Vorzugsweise entspricht die Länge des Haltearms etwa dem Radius einer kreisförmigen Scheibe und das Halteteil greift in eine Mittelöffnung der Scheibe. Dadurch kann der Betätigungsarm sehr griffgünstig außerhalb der Fläche der Scheibe zum Rand des Aufbewahrungsbehälters hin angeordnet werden. Zusätzlich wird durch die Anordnung des zu drückenden Betätigungsarmes außerhalb des Umfangs der Scheibe verhindert, daß bei Betätigung der Wippe die Scheibe eingeklemmt wird. In dem Mittelloch der Scheibe bietet sich eine sehr günstige Haltemöglichkeit für den Haltevorsprung, der geschützt im Mittelbereich des Behälters angeordnet ist.

Bevorzugt verläuft die Schwenkachse im Randbereich einer eingeschobenen Scheibe nach Art einer Tangente oder Kreissehne. Hierdurch wird einerseits ein Einklemmen der Scheibe verhindert, da der Betätigungsarm außerhalb des Scheibenumfangs liegt, und andererseits eine kompakte Bauform erzielt, da die Schwenkachse möglichst weit nach innen positioniert ist.

Bei einer bevorzugten Ausführungsform sind die Wandteile um wenigstens die Länge des Betätigungsarmes über den Außenumfang der Scheibe verlängert. Dadurch ist sichergestellt, daß beim Drücken des Betätigungsarmes ein fester Punkt zum Aufbau eines Gegendrucks vorhanden ist; d.h. die Finger drücken den Betätigungsarm gegen das darunter liegende Wandteil. Weiterhin bildet der unter dem Betätigungsarm liegend Bereich des zweiten Wandteils für den Betätigungsarm einen Anschlag, so daß ein zu weites Ausschwenken der Wippe mit einem möglichen Ausbrechen der Schwenkanordnung unterbunden wird. Auch gewährleisten die um die Länge des Betätigungsarmes verlängerten Wandteile eine glatte Außenkontur des Aufbewahrungsbehälters. Der Betätigungsarm ist somit durch das ihn umschließende Wandteil vor Beschädigungen geschützt. Eine glatte Außenkontur ist weiterhin für eine platzsparende Lagerung des Behälters von Vorteil.

Bei einer weiteren vorteilhaften Ausführungsform sind in der Kammer Führungsstege an wenigstens einem der Wandteile angeordnet, welche die Scheibe bei derem Einschieben in eine vorbestimmte Aufbewahrungsposition führen. Dies ist insbesondere von Vorteil, wenn der Haltevorsprung in das Mittelloch der Scheibe eingreifen soll, da hier eine genaue Positionierung der Scheibe in Bezug auf das Halteteil bzw. den Haltevorsprung erleichtert wird. Die Führungsstege können auch durch die Innenseiten der Seitenkanten des Behälters gebildet werden, d.h. die Breite der Kammer entspricht dem Durchmesser der Scheibe, so daß diese durch die Seitenkanten geführt wird.

Weiter bevorzugt ist eine Ausführungsform des Aufbewahrungsbehälters, bei dem die Wippe zumindest im Bereich des Betätigungsarmes mit Teilen eines Originalitätsverschlußes ausgebildet ist, die bei Erstbenutzung nach Art einer Sollbruchstelle die Wippe freigeben. Dies bedeutet, daß vor dem ersten Entnehmen der Scheibe aus dem Aufbewahrungsbehälter dieser Originalitätsverschluß, der nicht wiederverschließbar ist, geöffnet werden muß, um die Wippe freizugeben, was zum Entnehmen der Scheibe notwendig ist. Es ist also möglich an dem Behälter zu erkennen, ob die innenliegende Scheibe noch originalverpackt ist oder bereits zuvor dem Behälter entnommen wurde. Vorzugsweise wird dieser Originalitätsverschluß in der Weise ausgeführt, daß ein Bauteil, welches den Betätigungsarm blockiert, über Sollbruchstellen mit einem der Wandteile verbunden ist. Es kann dann vor dem ersten Entnehmen der Scheibe leicht herausgebrochen, nicht aber wieder eingesetzt werden. Weiterhin können solche Sollbruchstellen auch in dünnen Stegen oder in Form dünner Stege vorgesehen sein, die in den Trennfugen den Betätigungsarm mit den umliegenden Bereichen des Wandteils verbinden und beim ersten Betätigen des Betätigungsarmes brechen.

Bei einer weiteren bevorzugten Ausführungsform des Aufbewahrungsbehälters ist ein Abschlußteil in die Schlitzöffnung einsetzbar, welches in eingesetzter Stellung mit wenigstens einem Wandteil lösbar verbunden ist und eine Entnahme des Datenträgers verhindert. Dieses Abschlußteil kann die Schlitzöffnung abschließen, um beispielsweise das Eindringen von Schmutz zu verhindern, wie es beim Transport außerhalb des Hauses zum Beispiel im Auto leicht geschehen kann. Weiterhin bietet das Abschlußteil eine zusätzliche Sicherung gegen versehentliches Entgleiten der Scheibe, insbesondere wenn der Betätigungsarm versehentlich gedrückt wird, was zum Beispiel beim Transport des Aufbewahrungsbehälters gemeinsam mit anderen Gegenständen leicht geschehen kann.

Vorzugsweise ist wenigstens eine federnde Rastzunge am Abschlußteil und eine zugehörige Rastöffnung im gegenüberliegenden Wandteil vorgesehen, wobei die Rastöffnung eine durchgehende Bohrung aufweist, durch die ein Öffnungswerkzeug einsetzbar ist. Durch solche Rastzungen, die beim Einschieben des Abschlußteils in die Schlitzöffnung in die Rastöffnungen auf der Innenseite des Aufbewahrungsbehälters einrasten, wird das Abschlußteil zuverlässig in dem Aufbewahrungsbehälter festgehalten und das Abschlußteil sichert auf diese Weise die Scheibe. Zum Lösen des Abschlußteils können die Rastzungen durch die Bohrungen von einem Öffnungswerkzeug, beispielsweise in Form eines Stiftes, aus den Rastöffnungen herausgedrückt werden. Eine solche Rastzunge kann beispielsweise durch Trennschlitze in dem Abschlußteil ausgebildet sein, wobei das Abschlußteil mit der Rastzunge einstückig beispielsweise aus Kunststoff im Spritzguß hergestellt werden kann. Die auf die Zunge wirkende Federkraft wird bei der elastischen Verformung des Materials, z.B. des Kunststoffes, beim Verbiegen der Zunge aufgebaut

In einer bevorzugten Ausführungsform ist das Abschlußteil als Diebstahlsicherung mit wenigstens zwei Rastzungen ausgebildet, die entfernt voneinander jeweils im Bereich eines der Enden der Schlitzöffnung angebracht sind. Eine solche Diebstahlsicherung kann zum Beispiel vor dem Verkauf im Laden eingesetzt werden, um zu verhindern, daß die Scheibe dem Behälter entnommen wird. Dies ist insbesondere sinnvoll, wenn auf dem Behälter, beispielsweise im Preisetikett, ein Auslöseteil eines elektronischen Alarmsystems angebracht ist. Die Rastzungen sind möglichst weit voneinander entfernt in den Randbereichen des Abschlußteils angeordnet, um ein Öffnen ohne das vorgesehene Öffnungswerkzeug zu erschweren oder auszuschließen. Bei mehreren, weit voneinander entfernten Rastzungen ist es äußerst schwierig diese ohne ein spezielles Werkzeug aus den Rastöffnungen herauszudrücken, um ein Herausziehen des Abschlußteils aus dem Aufbewahrungsbehälter zu ermöglichen. Dies ist insbesondere für einen Dieb im Laden schwierig unauffällig durchzuführen.

Vorzugsweise sind im Bereich jedes Endes der Schlitzöffnung jeweils wenigstens zwei Rastzungen vorgesehen. Diese zusätzliche Anzahl von Rastzungen erhöht die Schwierigkeit eines unbefugten Öffnens ohne das vorgesehene Werkzeug weiter.

Bevorzugter Weise ist am freien Ende jeder Rastzunge mindestens ein Verhakungsglied ausgebildet, welches in eine zugehörige Rastöffnung eingreift. Hierdurch wird ein noch sichereres Verrasten der Rastzungen in den Rastöffnungen erreicht.

Bei einer weiteren bevorzugten Ausführungsform sind die Verhakungsglieder in Richtung der Einschiebebewegung des Abschlußteils angeschrägt. Dies bewirkt, daß die Verhakungsglieder mit den Rastzungen beim Einschieben in den Aufbewahrungsbehälter an der Kante der Schlitzöffnung zurückgedrückt werden, indem die angeschrägten Flächen der Verhakungsglieder an der Kante abgleiten. Dadurch ist es leicht möglich, das Abschlußteil in den Aufbewahrungsbehälter einzuschieben, ohne spezielle Werkzeuge zum Zurückdrücken der Rastzungen verwenden zu müssen. Da die Verhakungsglieder in der anderen Richtung gerade bzw. hakenförmig ausgestaltet sind, ist ein Zurückziehen, wenn sie einmal in den Rastöffnungen eingerastet sind, nicht mehr möglich.

Vorzugsweise sind die Verhakungsglieder in Form von ein Sägezahnprofil aufweisenden Rastflächen ausgebildet, wobei die schrägen Kanten des Sägezahnprofils in Einschubrichtung des Abschlußteils und die steilen bzw. senkrechten Kanten auf der Rückseite der Zähne angeordnet sind und sich die senkrechten Kanten in einem in den Rastöffnungen entsprechend angeordneten Sägezahnprofil mit wenigstens einem Sägezahn verhaken können. Dies bewirkt ein äußerst festes Verhaken der Verhakungsglieder in den Rastöffnungen. Vor allem bewirkt diese Bauweise aufgrund der mehreren hintereinander liegenden Verhakungsmöglichkeiten der Sägezahnprofile von Rastfläche und Rastöffnung, daß beim Entriegeln die Rastzunge so lange heruntergedrückt werden muß, bis das Abschlußteil soweit herausgezogen ist, daß Rastfläche und Rastöffnung sich auch nicht mehr teilweise überdecken. Würde sich die Rastzunge vorher zurückbewegen, würde die Rastfläche mit einer anderen Stelle ihres Sägezahnprofils erneut mit dem Sägezahnprofil der Rastöffnung in Eingriff kommen. Dies erschwert bei einer Diebstahlsicherung zusätzlich ein unbefugtes Lösen des Abschlußteils aus dem Aufbewahrungsbehälter.

Bei einer weiteren Ausführungsform des Aufbewahrungsbehälters sind die Durchgangsbohrungen der Rastöffnungen in einem vorbestimmten Muster auf dem Wandteil angeordnet, welches mit einer Anordnung von Stiften auf einem Öffnungswerkzeug übereinstimmt, sobald dieses mit dem Behälter zusammengepaßt wird. Dies ermöglicht, daß die Stifte zum Öffnen der Rastzungen des Abschlußteils in einem festgelegten Muster auf dem Öffnungswerkzeug angeordnet sein können. Zum Öffnen kann nun der Aufbewahrungsbehälter so auf das Öffnungswerkzeug gelegt werden, daß die Stifte gleichzeitig in sämtliche Durchgangsbohrungen der Rastöffnungen eindringen und so sämtliche Rastzungen des Abschlußteils gleichzeitig zurückdrücken, so daß das Abschlußteil aus der Schlitzöffnung des Aufbewahrungsbehälters herausgezogen werden kann. Dadurch kann auch bei einer Anordnung mehrerer Rastzungen und Rastöffnungen, die ein unbefugtes Öffnen erschweren sollen, mit dem passenden Öffnungswerkzeug das Abschlußteil schnell und einfach gelöst werden. Das Öffnungswerkzeug kann an einer Ladenkasse fest montiert sein, um beim Kauf einer Scheibe, insbesondere eines Datenträgers die Diebstahlsicherung in Form des Abschlußteils nach dem Bezahlen schnell aus dem Aufbewahrungsbehälter lösen zu können.

Als weitere vorteilhafte Ausführungsform weisen die Rastflächen an den Positionen, die den Durchgangsbohrungen gegenüber liegen, profillose Gleitbahnen auf, die sich in Einschubrichtung des Abschlußteils über die gesamte Länge der Rastflächen erstrecken und deren Breite mindestens der Breite der Stifte entspricht. Dies ist insbesondere bei der Ausgestaltung der Rastflächen mit einem Sägezahnprofil der Oberfläche von Vorteil. Auf diese Weise wird nämlich verhindert, daß der Stift des Öffnungswerkzeuges, wenn er durch die Durchgangsbohrung in der Rastöffnung hindurch auf die Rastfläche drückt, sich in dem Profil der Rastfläche verhakt und das Abschlußteil festhält. Weiterhin wird vermieden, daß der Stift das Profil der Rastfläche beschädigt, da er mit seinem Ende oder seiner Spitze auf einer separaten, profillosen Gleitbahn beim Herausziehen des Abschlußteils abgleitet. Dadurch kann ein geringer Verschleiß und eine lange Lebensdauer der Rastzungen und damit auch des Abschlußteils sichergestellt werden.

In einer weiteren Ausführungsform ist an dem Abschlußteil ein alarmauslösendes Glied eines elektromagnetischen Überwachungssystems angebracht. In der Diebstahlsicherung in Form des Abschlußteils kann beispielsweise eine Spule eines solchen Alarmsystems fest angebracht sein, so daß beim Verlassen des Ladens mit dem Abschlußteil in dem Aufbewahrungsbehälter ein Alarmsystem am Ausgang des Ladens ausgelöst wird. Wird jedoch nach dem Bezahlen an der Kasse das Abschlußteil aus dem Aufbewahrungsbehälter entfernt, wird somit auch das Auslöseglied des Alarmsystems entfernt, so daß nun von dem Aufbewahrungsbehälter mit der innenliegenden Scheibe kein Alarm mehr ausgelöst wird. Das Abschlußteil mit dem Auslöseglied verbleibt im Laden und kann erneut als Diebstahlsicherung für weitere Scheiben in den erfindungsgemäßen Aufbewahrungsbehältern genutzt werden. Das Auslöseglied für eine elektronische Alarmvorrichtung, wie eine Spule oder ein anderes elektronisches Bauteil, wird fest in einer entsprechend vorgesehenen Ausnehmung oder unter einer entsprechenden Abdeckung des Abschlußteils in diesem angebracht, so daß es von dem Abschlußteil nur schwer oder bevorzugt gar nicht zu trennen ist. Beispielsweise kann das Auslöseglied beim Spritzgießen eines Abschlußteils aus Kunststoff gleich mit eingegossen werden. Weiterhin ist es später möglich das Auslöseglied, das verschiedene Abmessungen aufweisen kann, in einer entsprechenden Ausnehmung einzugießen, einzuschweißen, einzukleben oder einzuklipsen. Dadurch kann das Auslöseglied nicht einfach von dem Aufbewahrungsbehälter getrennt werden, wie es zum Beispiel bei auf den Aufbewahrungsbehälter aufgeklebten, abtrennbaren Sicherungsetiketten möglich ist.

Die Gestaltung des erfindungs gemäßen Aufbewahrungsbehälters für scheibenförmige Gegenstände ist jedoch nicht auf die hier beschriebenen, bevorzugten Ausführungsformen beschränkt, vielmehr sind weitere Ausführungsformen denkbar. So kann die äußere Form des Aufbewahrungsbehälters die Form einer konventionellen CD-Verpackung aufweisen, kann jedoch auch nach anderen ästhetischen oder praktischen Gesichtspunkten gestaltet sein. Der Behälter kann aus Kunststoff gefertigt sein, wobei insbesondere transparenter Kunststoff zweckmäßig ist, da dann von außen erkennbar ist, ob sich eine Scheibe in dem Behälter befindet, und weiterhin ein Aufdruck auf der Scheibe auch von außen zu lesen ist. Der erfindungsgemäße Aufbewahrungsbehälter kann jedoch, z.B. zu Marketingzwecken, auch aus einem anderen Material, wie beispielsweise Karton, Metall oder Holz gefertigt sein. Insbesondere zum Beispiel für die Aufbewahrung von Schleifscheiben wird sich die Herstellung des Aufbewahrungsbehälters aus Metall anbieten.

Nachfolgend wird die Erfindung anhand beiliegender Zeichnungen beispielsweise beschrieben. In den Zeichnungen zeigt:
- Fig. 1:: ein oberes Wandteil eines Aufbewahrungsbehälters,
- Fig. 1a:: das obere Wandteil gemäß einer weiteren Ausführungsform,
- Fig. 2:: ein unteres Wandteil eines Aufbewahrungsbehälters,
- Fig. 3:: ein Abschlußteil eines Aufbewahrungsbehälters,
- Fig. 3a:: eine weitere Ausführungsform des Abschlußteils und
- Fig. 4:: ein Öffnungswerkzeug.

Die hier beschriebene Ausführungsform eines erfindungsgemäßen Aufbewahrungsbehälters für scheibenförmige Gegenstände ist vorgesehen für die Aufnahme eines Datenträgers und einer Informationsbroschüre und besteht aus zwei im Spritzgußverfahren hergestellten Wandteilen aus Polystyrol, Polypropylen oder ähnlichem. Beide Teile werden später über vorgesehene Rasteinrichtungen miteinander verrastet.

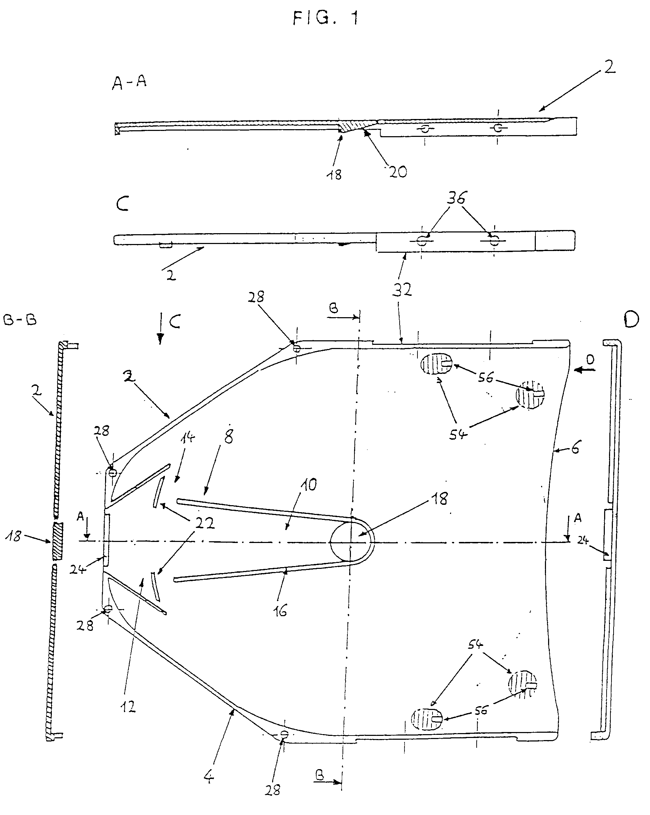

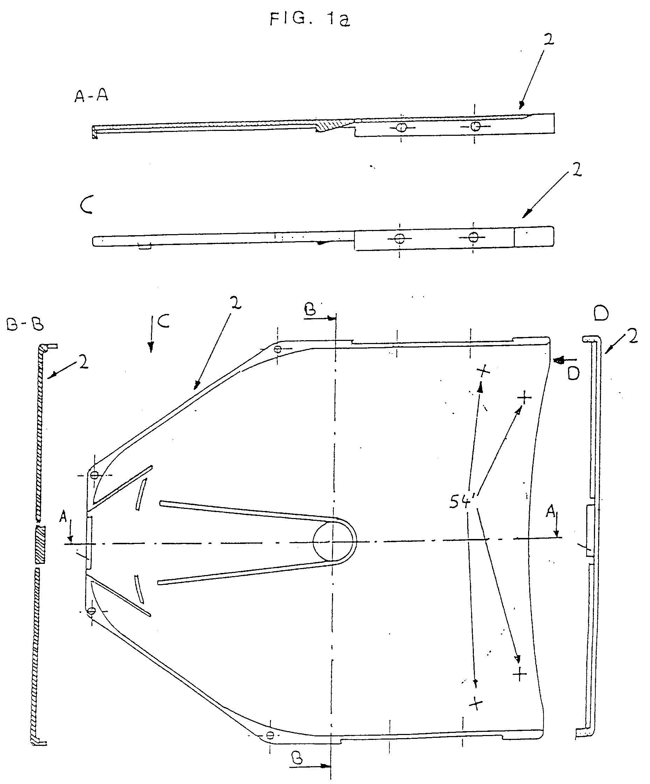

Fig. 1 bzw. 1a zeigen ein oberes Wandteil 2 eines Aufbewahrungsbehälters in verschiedenen Ansichten. Das flache Wandteil 2 hat die Form eines Rechtecks, das in ein Endteil übergeht, bei welchem zwei benachbarte Ecken spiegelsymmetrisch zueinander abgeschrägt sind, so daß dieses Endteil des Wandteils 2 trapezförmig ausgebildet ist. An fünf seiner sechs Seitenkanten weist das Wandteil durchgehende Kanten bzw. Stege 4 auf, welche sich von der die Innenseite des Aufbewahrungsbehälters bildenden Seite im rechten Winkel erheben. Die dem trapezförmigen Endteil gegenüberliegende Seitenkante weist keinen Steg 4 auf, sie bildet vielmehr im zusammengesetzten Zustand des Aufbewahrungsbehälters eine Schlitzöffnung 6, die rechtwinklig zur Symmetrielinie A-A des Wandteils verläuft. Diese Seitenkante ist zur Mitte des Wandteils 2 gerundet, um später ein leichteres Ergreifen des Datenträgers und der Informationsbroschüre zu ermöglichen.

Entlang der Längsachse A-A, der Symmetrieachse des Wandteils 2, erstreckt sich ausgehend von dem trapezförmigen Endteil des Wandteils 2 eine Wippe 8 bis etwa zur Mitte des Wandteils. Diese Wippe 8 umfaßt zwei Wippenarme, den Haltearm 10 und den Betätigungsarm 12, die mit einer Schwenkanordnung 14 einteilig ausgebildet sind und sich ausgehend von der Schwenkanordnung 14 zur Mitte des Wandteils 2 bzw. zu dessen Rand hin erstrecken. Die Schwenkanordnung 14 bildet eine Schwenkachse, um die die Wippe 8 schwenkbar ist, die sich senkrecht zur Symmetrieachse erstreckt und um die Länge des Betätigungsarmes 12 vom Rand des trapezförmigen Endteils beabstandet ist. Die Schwenkanordnung 14 mit dem Haltearm 10 und dem Betätigungsarm 12 und das übrige Wandteil 2 bilden ein Baute, d.h. sie sind einstückig gefertigt. Die Wippenarme 10, 12 bilden einen Teil der Fläche des Wandteils 2 und sind durch Trennschlitze 16 von den umliegenden Bereichen des Wandteils 2 getrennt. Die Schlitze 16 erstrecken sich ausgehend von der Schwenkanornung symmetrisch zur Längsachse A-A und sind in etwa V- oder U-förmig ausgebildet, wobei sich ihre Scheitelpunkte an den freien Enden der zugehörigen Wippenarme befinden. Der Betätigungsarm 12 ist als Drucktaste deutlich breiter als der Haltearm 10 ausgebildet und kann so die bei der Betätigung des im Vergleich zu dem Haltearm 10 kürzeren Betätigungsarmes 12 auftretenden Kräfte besser aufnehmen. Die der Schwenkanordnung 14 zugewandten Enden der Trennschlitze 16 des Haltearms 10 und des Betätigungsarmes 12 sind in Längsrichtung um einige Millimeter voneinander beabstandet, wodurch die aufgrund der Elastizität des Kunststoffs vorhandene Federwirkung der Wippe 8 verstärkt wird.

Das freie Ende des Haltearms 10 trägt einen kreisförmigen Haltevorsprung 18, dessen Mittelpunkt zu der die Schlitzöffnung 6 bildenden Kante des Wandteils in Richtung der Längsachse A-A einen Abstand hat, der dem Radius des aufzunehmenden Datenträgers entspricht. Die Innenseiten der sich am Rand des Wandteils 2 erstreckenden Kanten bzw. Stege 4 weisen zum Mittelpunkt des Haltevorsprungs 18 einen radialen Abstand auf, der geringfügig größer als der Radius des aufzunehmenden Datenträgers ist. Dadurch bilden die Stege 4 an den abgeschrägten Seiten des trapezförmigen Endteiles für den Datenträger beim Einschieben einen Anschlag, während die zur Längsachse A-A parallelen Stege 4 eine Führung des Datenträgers in Einschubrichtung bilden. Die Seitenkante des trapezförmigen Endteiles des Wandteiles weist zum Mittelpunkt des Haltevorsprungs 18 einen Abstand auf, der etwa der Länge des Betätigungsarmes 12 der Wippe 8 plus dem Radius des aufzunehmenden Datenträgers entspricht.

Der Haltevorsprung 18 steigt ausgehend von dem freien Ende des Haltearms 10, das der Schlitzöffnung 6 zugewandt ist, in Form einer Gleitrampe 20 schräg an und weist an seiner gegenüberliegenden Seite eine rechtwinklige Kante auf, die den Datenträger am Umfang eines Mittelloches desselben hintergreifen kann.

Der Betätigungsarm 12 ist deutlich kürzer als der Haltearm 10 und erstreckt sich bis zur Seitenkante des trapezförmigen Endteiles, an dem auf der Breite des Betätigungsarmes 12 der Steg 4 unterbrochen ist. Dadurch kann der Betätigungsarm 12 sich im zusammengesetzten Behälter frei nach innen bewegen. In der Nähe der Schwenkanordnung 14 sind auf dem Betätigungsarm 12 zwei zur Innenseite des Behälters gerichtete Anschlagstücke 22 angebracht. Diese Anschlagstücke 22 haben zum Mittelpunkt des Haltevorsprungs 18 auf dem Haltearm 10 einen Abstand, der geringfügig größer als der Radius des Datenträgers ist. Die Höhe der Anschlagstücke 22 senkrecht zum Betätigungsarm 12 ist geringer als der Abstand der beiden Wandteile 2, 26 voneinander, jedoch größer als die Dicke des Datenträgers, so daß die Anschlagstücke 22 beim Niederdrücken des Betätigungsarmes 12 für diesen einen Anschlag bilden, wodurch verhindert wird, daß der Datenträger an seinem Rand von dem Betätigungsarm 12 im Bereich der Schwenkanordnung 14 eingeklemmt werden kann. Weiterhin bilden die Anschlagstücke 22 neben den schrägen Seitenkanten der Wandteile einen Anschlag für den Datenträger beim Einschieben. Die Anschlagstücke 22 stützen weiterhin den Betätigungsarm 12 bei seiner Betätigung in der Nähe der Schwenkanordnung 14 auf dem gegenüberliegenden Wandteil 26 ab, wodurch die Schwenkanordnung 14 ein zusätzliches Auflager erhält und die Schwenkbewegung der Wippe 8 unterstützt bzw. verstärkt wird. Zusätzlich klemmen diese Anschlagstücke 22 eine zwischen ihnen und dem gegenüberliegendem Wandteil 26 liegende Broschüre beim Verschwenken der Wippe 8 ein, so daß die Broschüre beim Entnehmen des Datenträgers festgehalten wird und erst freigegeben wird, wenn die Wippe 8 wieder in ihre Ruhelage zurückgeschwenkt ist.

An seinem freien Ende, an der Seitenkante des trapezförmigen Endteiles des Wandteiles, weist der Betätigungsarm 12 einen Steg 24 auf, der einen Originalitätsverschluß bildet. Dieser Originalitätsverschluß 24 erstreckt sich im rechten Winkel von dem Betätigungsarm 12 zu einem im zusammengesetzten Zustand des Aufbewahrungsbehälters gegenüberliegenden Wandteil 26 hin und hat eine Höhe, die dem Abstand des Betätigungsarmes 12 von dem gegenüberliegenden Wandteil 26 entspricht. Der Originalitätsverschluß 24 ist über Sollbruchstellen mit dem Betätigungsarm 12 verbunden bzw. einstückig geformt und weist eine Breite auf, die geringer als die Breite des freien Endes des Betätigungsarmes 12 und des unterbrochenen Bereiches des Steges 4 ist. Der Originalitätsverschluß 24 blockiert daher zunächst die Bewegung des Betätigungsarmes 12 und damit der gesamten Wippe 8, weshalb vor der ersten Entnahme des Datenträgers aus dem Aufbewahrungsbehälter der Originalitätsverschluß 24 an den Sollbruchstellen herausgebrochen werden muß, wozu er aufgrund seiner geringeren Breite beispielsweise mit einem spitzen Gegenstand hintergriffen werden kann.

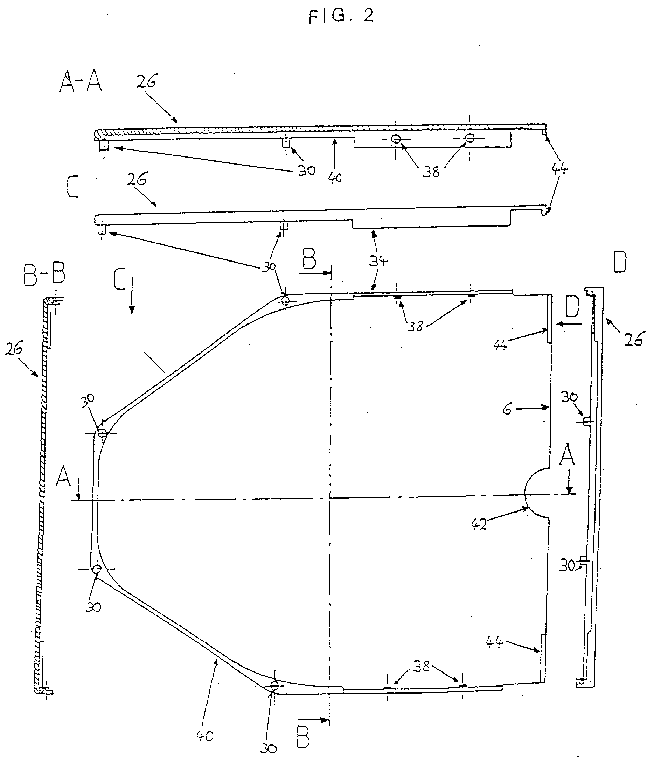

Zum Verrasten des Wandteils 2 mit dem in Fig. 2 gezeigten zweiten Wandteil 26 weist das Wandteil 2 mehrere Rasteinrichtungen auf.

An den vier Ecken an den schrägen Seiten des trapezförmigen Endteiles des Wandteils 2 sind die Stege 4 breiter ausgeführt. In den breiteren Stegen an den Eckpunkten befindet sich jeweils eine Rastaufnahme 28 in Form eines kreisförmigen Loches zur Aufnahme eines entsprechenden, an dem zweiten Wandteil 26 angebrachten, Raststiftes.

Weiterhin sind die Stege 4 in einem Bereich der zur Längsachse A-A parallelen Seitenteile als dünnere Kantenabschnitte 32 ausgeführt. Diese beiden dünneren Kantenabschnitte 32 weisen eine geringere Breite als die angrenzenden Stege 4 auf, so daß ihre nach außen gelegene Fläche gegenüber der Außenkante der übrigen Wandteilseite zurückspringt. Das Außmaß dieses Rücksprungsentspricht der Breite von Kantenabschnitten 34, die an dem zweiten Wandteil 26 (Figur 2) ausgebildet sind, so daß, wenn die Kantenabschnitte 32 und 34 im zusammengesetzten Zustand aufeinander zu liegen kommen, sie gemeinsam genauso breit wie die Stege 4 sind und sich somit eine glatte Kantenfläche des Aufbewahrungsbehälters ergibt. Die Kantenabschnitte 32 haben zudem eine größere Höhe als die Stege 4, damit sie in zusammengesetztem Zustand des Aufbewahrungsbehälters die gegenüberliegenden Kantenabschnitte 34 des zweiten Wandteils 26 überlappen. Die Kantenabschnitte 32 weisen jeweils zwei Rastaufnahmen in Form von Rastlöchern 36 auf, in die Raststifte 38, die sich auf den Kantenabschnitten 34 des Wandteils 26 (Fig. 2) befinden, einrasten können.

Fig. 2 zeigt verschiedene Ansichten des zweiten Wandteils 26, welches später mit dem Wandteil 2 aus Fig. 1 zusammengesetzt bzw. verrastet wird. Das Wandte 26 weist dieselbe Außenkontur wie das.anhand von Fig. 1 beschrieben Wandteil 2 auf, d.h. es handelt sich ebenfalls um ein flaches, rechteckiges Wandteil, das in ein Endteil übergeht, von dem zwei benachbarte Ecken spiegelsymmetrisch zueinander so abgeschrägt sind, daß das Wandteil 26 an diesem Endteil trapezförmig ausgestaltet ist.

Die Fläche des Wandteils 26 weist jedoch keine Wippe auf, sondern ist durchgängig glatt und geschlossen ausgeführt.

Die durchgängigen Kanten bzw. Stege 40 entlang der Seitenkanten des Wandteils 26 sind spiegelbildlich zu den Stegen 4 des Wandteils 2 ausgebildet, so daß die Stege 4 und 40, wenn die Wandteile 2 und 26 zusammengesetzt werden deckungsgleich aufeinander zu liegen kommen. Der Steg 40 im Bereich der Flachseite des trapezförmigen Endteiles weist jedoch keine Unterbrechung auf, wodurch er später als zusätzlicher Anschlag für den im zusammengesetzten Zustand des Aufbewahrungsbehälters gegenüberliegenden Betätigungsarm 12 dient. Anstelle der Rastaufnahmen 28 der Stege 4 des Wandteils 2 weisen die Stege 40 des Wandteils 26 zu den Rastaufnahmen 28 spiegelbildlich angeordnete Raststifte 30 auf, die in die Rastaufnahmen 28 eingreifen und dort einrasten können.

Das Wandteil 26 weist an seinen zur Längsachse A-A parallelen Seitenkanten Kantenabschnitte 34 auf, welche schmaler und höher als die übrigen Stege 40 ausgebildet sind. Diese Kantenabschnitte springen auf der Innenseite des Steges 40 gegenüber diesem zurück um ein Maß, welches der Breite der Kantenabschnitte 32 entspricht, so daß, wenn die Kantenabschnitte 32 und 34 überlappend übereinander zu liegen kommen, sie gemeinsam dieselbe Breite wie die angrenzenden Stege 4 und 40 aufweisen, wodurch eine glatte und durchgängige Kantenfläche sowohl an der Innen- als auch an der Außenseite des Aufbewahrungsbehälters entsteht. Die Kantenabschnitte 34 weisen an Positionen, die im Zusammengesetzten Zustand den Rastlöchern 36 der Kantenabschnitte 32 des Wandteils 2 (Fig. 1) gegenüberliegen, Raststifte 38 auf, die in die Rastlöcher 36 eingreifen bzw. einrasten können.

Weiterhin ist die Seitenkante des Wandteils 26, die dem trapezförmigen Endteil gegenüberliegt und rechtwinklig zur Symmetrieachse verlaufend im zusammengesetzten Zustand die Schlitzöffnung 6 bildet gerade ausgebildet und weist in ihrer Mitte eine halbkreisförmige Öffnung 42 auf, die ein Ergreifen einer eingeschobenen Informationbroschüre erlaubt. An den äußeren Rändern der Schlitzöffnung 6 weist die diese bildende Seitenkante des Wandteils 26 zwei Stege 44 auf, die eine Höhe haben, welche etwas geringer als die Dicke einer einzuschiebenden Informationsbroschüre ist, und die Informationsbroschüre bei eingeschobenen Datenträger daran hindern aus dem Aufbewahrungsbehälter herauszurutschen.

Die beiden zuvor beschriebenen Wandteile 2 und 26 werden nach ihrer Herstellung durch Spritzgießen deckungsgleich aufeinander gesetzt, so daß die Stege 4 und 40 sich gegenüberliegen. Nun werden beide Teile zusammengedrückt, wobei die Raststifte 30 und 38 in die Rastaufnahmen 28 bzw. Rastlöcher 36 eingreifen und die beiden Wandteile 2 und 26 fest miteinander verbunden werden. Die beiden Wandteile 2 und 26 bilden nach den Zusammensetzen durch ihre Flächen und die Stege 4 und 40 entlang der Kanten eine Kammer zur Aufnahme des Datenträgers und der Informationsbroschüre.

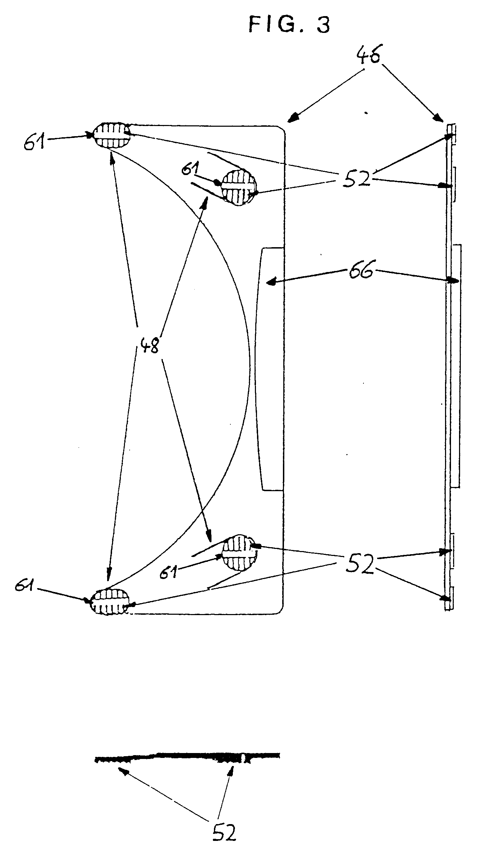

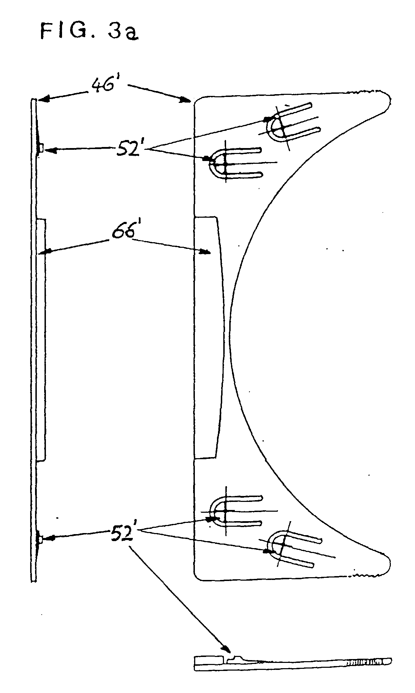

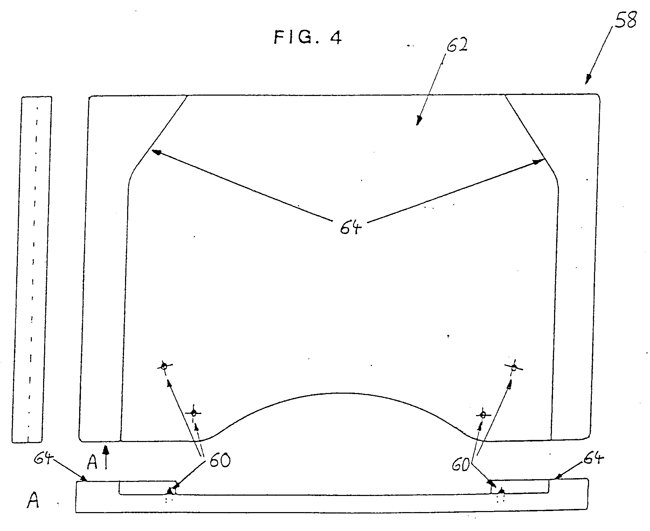

Weiterhin weist der Aufbewahrungsbehälter eine in den Figuren 3, 3a und 4 dargestellte Diebstahlsicherung auf, die eine Entnahme des Datenträgers aus dem Aufbewahrungsbehälter ohne zusätzliches Werkzeug unmöglich macht.

Figur 3 zeigt ein Abschlußteil 46, das als Diebstahlsicherung in den Aufbewahrungsbehälter durch die Schlitzöffnung 6 eingeschoben werden kann. Das Abschlußteil 46 ist ebenfalls aus Kunststoff im Spritzgußverfahren hergestellt und hat eine rechteckige Grundform mit einer Länge, die der Länge der Schlitzöffnung 6 entspricht. An einer Längsseite ist das Abschlußteil 46 in Form eines Kreisbogenabschnittes ausgeschnitten, wobei der Radius dieses Kreisbogens dem Radius des Datenträgers entspricht. Die Seite, die dem kreisbogenförmigen Ausschnitt gegenüberliegt, ist gerade ausgebildet. Die Breite des Abschlußteils 46 entspricht etwa dem Radius des Datenträgers. Die Dicke des Abschlußteils 46 ist etwas größer als die Dicke des Datenträgers und entspricht etwa der Differenz aus der Höhe der Einschuböffnung und der Dicke der Informationsbroschüre. Somit füllt das Abschlußteil 46, wenn es in den Aufbewahrungsbehälter mit eingelegtem Datenträger und Informationsbroschüre eingeschoben ist, den verbleibenden Raum außerhalb des Datenträgers in dem Aufbewahrungsbehälter zur Schlitzöffnung 6 hin vollständig aus.

Das Abschlußteil 46 weist vier Rastzungen 48 auf, die einstückig mit dem Abschlußteil 46 gefertigt sind. Zwei der Rastzungen 48 befinden sich an den Enden des Kreisbogens, der mit der jeweiligen Seitenkante ein zungenförmiges Ende bildet. Die zwei anderen Rastzungen sind Bestandteil der Fläche des Abschlußteils 26 und durch Trennschlitze 50 in dieser geformt. Die Rastzungen 48 tragen an ihren freien Enden hervorstehende Rastflächen 52, die ein sägezahnförmiges Profil aufweisen, dessen schräge Seiten in Einschubrichtung des Abschlußteils 46 in den Aufbewahrungsbehälter liegen. Die Rastzungen 48 haben aufgrund der Elastizität des Kunststoffes eine Federwirkung, die die Rastflächen 52 in ihrer Ausgangslage hält.

Dem Abschlußteil 46 entsprechend weist das Wandteils 2, das in Figur 1 gezeigt ist, Rastöffnungen 54 auf, die in eingeschobenem Zustand des Abschlußteils dem an diesem angebrachten Rastflächen 52 gegenüberliegen, so daß die Rastflächen 52 in weitgehend entspannter Lage der Rastzungen 48 in die Rastöffnungen 54 eingreifen. Entsprechend den Rastflächen 52 weisen auch die Rastöffnungen 54 auf ihrer Oberfläche ein sägezahnförmiges Profil auf, das so angeordnet ist, daß die Abschrägungen gegen die Einschieberichtung des Abschlußteils gerichtet sind, so daß die Abschrägungen des Rastflächenprofils und die Abschrägungen der Rastöffnungen 54 beim Einschieben des Abschlußteils 46 aufeinander abgleiten. Die Rastflächen 52 rasten dann in dem Profil der Rastöffnungen 54 so ein, daß jeweils die senkrechten Seiten der Sägezahnprofile gegeneinander zu liegen kommen, was ein Zurückbewegen der Rastflächen 52 und damit des Abschlußteils 46 unmöglich macht.

Zusätzlich weist das entsprechende Wandteil 2 in den Rastöffnungen 54 Durchgangslöcher oder -bohrungen 56 auf, die sich von der Innenseite der Rastöffnungen zur Außenfläche des Wandteils 2 erstrecken. Diese Durchgangsbohrungen 56 ermöglichen es von außen mit einem Öffnungswerkzeug 58 bzw. darauf angebrachten Stiften 60 (Fig. 4) die Rastzungen 48 gegen ihre Federwirkung aus den Rastöffnungen 54 zurückzudrücken, so daß die Rastflächen 52 außer Eingriff gelangen und ein Herausziehen des Abschlußteils 46 aus dem Aufbewahrungsbehälter ermöglicht wird. Die Rastflächen 52 mit dem Sägezahnprofil weisen in ihrer Mitte eine profillose Gleitbahn 61 auf, auf die die Stifte 60 drücken, so kann das Abschlußteil 46 beim Herausziehen nicht mit dem Profil der Rastflächen 52 an den Stiften 60 des Öffnungswerkzeuges 58 hängenbleiben.

Das Öffnungswerkzeug 58, das in Fig. 4 gezeigt ist, weist Stifte 60 auf, die in ihrer Form und Größe den Durchgangsbohrungen 56 in dem Wandte 2 entsprechen. Die Stifte 60 ragen aus einer flachen Grundplatte 62 soweit hervor, daß ihre Länge mindestens der Dicke des Wandteils 2 entspricht, so daß sie die Rastflächen 52 vollständig aus den Rastöffnungen 54 herausdrücken können. Die Anordnung der Stifte 60 auf der Grundplatte 62 des Öffnungswerkzeuges 58 entspricht spiegelbildlich der Anordnung der Durchgangslöcher 56 und damit auch der Anordnung der Rastöffnungen 54 in dem Wandteil 2 bzw. der Rastflächen 52 an dem Abschlußteil 46. Die flache, rechtwinklige Grundplatte 62 des Öffnungswerkzeuges 58 weist an zwei gegenüberliegenden Seitenkanten Positionierleisten 64 auf, deren Innenform der Außenkontur der zwei Längsseiten des Aufbewahrungsbehälters, die die zwei schrägen Trapezseiten umfassen, entsprechen. Dadurch wird eine präzise Positionierung des Aufbewahrungsbehälters auf dem Öffnungswerkzeug 58 ermöglicht, wobei die Wandfläche 2 flach auf der Grundplatte 62 zu liegen kommt und die Stifte 60 in die Durchgangsbohrungen 56 eindringen.

Fig. 3 a zeigt eine weitere mögliche Ausführungsform eines Abschlußteils 46', bei dem die Rastflächen 52' kreuzförmig ausgestaltet sind. Dementsprechend sind auch die Rastöffnungen 54' an einem entsprechenden Wandteil 2 kreuzförmig, wie in Fig. 1a gezeigt.

Beide Ausführungsformen des Abschlußteils 46, 46' (Fig. 3, 3a) weisen in einer Umhüllung 66, 66' einen Aufnahmeraum für ein Auslösglied eines elektromagnetischen Überwachungssystems auf. In dieser Umhüllung 66, 66' kann ein solches Auslöseglied fest und unlösbar in das Abschlußteil 46, 46' integriert werden. Die Umhüllung 66, 66' ist so am Rand auf der Oberseite des Abschlußteils 46, 46'ausgebildet, daß sie bei vollständig in den Aufbewahrungsbehälter eingeschobenem Abschlußteil 46, 46' innerhalb der Rundung der die Schlitzöffnung 6 bildenden Kante des Wandteils 2 zu liegen kommt, so daß das Abschlußteil 46, 46' in dieser Lage bündig mit den Außenflächen des Aufbewahrungsbehälters abschließt.

Nachfolgend wird die Funktion des erfindungsgemäßen Aufbewahrungsbehälters beschrieben.

Nach dem Spritzgießen werden die beiden Wandteile 2 und 26, wie oben beschrieben zusammengesetzt. Dann wird die dem Datenträger beiliegende Informationbroschüre in den Aufbewahrungsbehälter durch die Schlitzöffnung 6 eingeschoben. Die Broschüre hat eine solche Form, daß sie die Fläche zwischen den Stegen 40 und 44 ausfüllt, wobei sie in den Bereich unter dem Betätigungsarm 12 hineinreicht, d.h.
über die Anschlagstücke 22 hinausragt. Nun wird der Datenträger durch die Schlitzöffnung 6 in den Aufbewahrungsbehälter geschoben, wobei das sich vorausbewegenden Ende des Datenträgers über die Gleitrampe 20 den Haltevorsprung 18 und damit den Haltearm 10 nach oben drückt. Durch diese Auslenkung des Haltearms 10 baut sich im Schwenkbereich 14 eine Federspannung auf, die dafür sorgt, daß wenn der Datenträger weit genug eingeschoben ist, d.h. bis er an den schrägen Seitenwänden des trapezförmigen Endteiles des Aufbewahrungsbehälters anstößt, der Haltearm 10 wieder in seine Ruhelage zurückbewegt wird. Dabei greift nun der Haltevorsprung 18 in das Mittelloch des Datenträgers ein und hintergreift diesen so, daß er nicht mehr aus dem Aufbewahrungsbehälter herausrutschen kann. Gleichzeitig wird die nun unter dem Datenträger liegende Broschüre durch die Stege 44 am Herausrutschen aus dem Aufbewahrungsbehälter gehindert.

Bei diesem Einschiebevorgang bewegt sich nur der Haltearm 10 der Wippe 8 aus seiner Ruhelage, da der Betätigungsarm 12 aufgrund des ihn blockierenden Originalitätsverschlußes 24 nicht in der der Bewegung des Haltearms 10 entgegengesetzten Bewegungsrichtung ausgelenkt werden kann.

Nun wird vor dem Verkauf in die Schlitzöffnung 6 das Abschlußteil 46 eingeschoben, welches auch bei einem eventuellen Herausbrechen des Originalitätsverschlußes 24 den Datenträger zuverlässig gegen Entnehmen aus dem Aufbewahrungsbehälter sichert. In dem Abschlußteil 46 befindet sich ein elektronisches Auslöseglied eines elektromagnetischen Überwachungssystems, so daß das Abschlußteil 46 aus dem Aufbewahrungsbehälter entfernt werden muß, bevor der Aufbewahrungsbehälter mit dem darinliegendem Datenträger aus dem Laden getragen wird, da ansonsten am Ausgang eine Alarmvorrichtung ausgelöst wird.

Beim Kauf des Datenträgers wird nun an der Kasse des Geschäftes das Abschlußteil 46 mit Hilfe des Öffnungswerkzeuges 58 aus dem Aufbewahrungsbehälter gelöst. Dazu wird dieser mit dem die Durchgangsbohrungen 56 aufweisenden Wandte 2 auf die Grundplatte 62 gelegt, wobei der Aufbewahrungsbehälter durch die Positionierleisten 64 so positioniert wird, daß die Stifte 60 in die Durchgangsbohrungen 56 eindringen. Die Stifte 60 drücken nun die Rastzungen 48 zurück, so daß die Rastflächen 52 von den Rastöffnungen 54 außer Eingriff kommen und das Abschlußteil 46 aus der Schlitzöffnung 6 herausgezogen werden kann. Das Abschlußteil 46 mit dem Auslöseglied verbleibt nun im Laden und kann erneut verwendet werden.

Vor der ersten Entnahme des Datenträgers aus dem Aufbewahrungsbehälter muß nun der Originalitätsverschluß 24, eventuell mittels eines spitzen Gegenstandes, herausgebrochen werden, um den Betätigungsarm 12 und somit die gesamte Wippe 8 freizugeben.

Zum Entnehmen des Datenträgers aus dem Aufbewahrungsbehälter hält man diesen mit der Schlitzöffnung 6 schräg nach unten und drückt auf den Betätigungsarm 12. Dadurch hebt sich der Haltearm 10 am anderen Ende der Wippe 8 an und der Haltevorsprung 18 kommt von dem Mittelloch des Datenträgers außer Eingriff, wodurch der Datenträger nicht mehr gehalten wird und aufgrund seiner Schwerkraft durch die Schlitzöffnung 6 aus dem Aufbewahrungsbehälter herausgleitet. Bei diesem Vorgang wird die Broschüre von den Anschlagstücken 22 eingeklemmt, so daß sie nicht gleichzeitig mit dem Datenträger aus dem Aufbewahrungsbehälter herausrutschen kann.

Mit dem Entlasten des Betätigungsarmes 12 und dem Zurückschwenken der Wippe 8 in ihre Ruhelage wird auch die Klemmung der Broschüre durch die Anschlagstücke 22 aufgehoben. Nun kann auch die Broschüre an der halbreisförmigen Öffnung 42 ergriffen werden und über die Stege 44 herübergehoben und aus dem Aufbewahrungsbehälter herausgenommen werden.

Zum Wiedereinschieben in den Aufbewahrungsbehälter wird zuerst wieder die Broschüre und anschließend der Datenträger eingeschoben. Der Datenträger hebt wieder mit seiner Vorderkante über die Gleitrampe 20 an dem Haltevorsprung 18 den Haltearm 10 an. Dabei wird nun aber auch in entgegengesetzter Richtung der Betätigungsarm 12 ausgelenkt, der nun nicht mehr durch den Originalitätsverschluß 24 blockiert ist. Die durch die Auslenkung bzw. das Verschwenken der Wippe 8 im Schwenkbereich 14 aufgebaute Federspannung drückt, sobald der Datenträger weit genug eingeschoben ist, die Wippe 8 wieder in ihre Ruhelage, wodurch der Haltevorsprung 18 wieder in Eingriff mit dem Mittelloch gebracht wird. Der Datenträger wird somit wieder sicher in dem Aufbewahrungsbehälter gehalten. Da die unter dem Datenträger liegende Broschüre kann aufgrund des darüberliegenden Datenträgers nicht über die Stege 44 gehoben werden und wird somit ebenfalls sicher in dem Aufbewahrungsbehälter gehalten.

## Patentansprüche

1. Aufbewahrungsbehälter für scheibenförmige Gegenstände, insbesondere Compact-Discs, CD-ROM, Bildplatten oder andere scheibenförmige, optische oder magnetische Datenträger mit
zwei gegenüberliegenden biegesteifen Wandteilen (2, 26), die entlang der Ränder miteinander verbunden sind und wenigstens eine Einschub- und Entnahmeschlitzöffnung (6) für eine Scheibe aufweisen, wobei die Wandteile (2, 26) eine Kammer bilden, deren Höhe der Dicke der Scheibe und gegebenenfalls einer zusätzlichen Informationsbroschüre entspricht und deren Längs- und Querabmessungen den Abmaßen der Scheibe und der Broschüre angepaßt sind, und die Schlitzöffnung (6) bei ihrer Ausrichtung nach unten ein Herausgleiten der Scheibe aus dem Behälter zuläßt,
und einer Haltevorrichtung zum Festhalten der Scheibe im Behälter in Form wenigstens einer Wippe (8), die an einem der Wandteile (2, 26) schwenkbar angeordnet ist und in ihrer Ruhestellung mit wenigstens einem Halteteil (18, 20) die Scheibe in dem Behälter so fixiert, daß dieser aus der Schlitzöffnung (6) nicht austreten kann, und in ihrer verschwenkten Stellung die Scheibe freigibt.

2. Aufbewahrungsbehälter nach Anspruch 1, bei welchem ein Arm der Wippe (8) als Haltearm (10) an seinem Ende das Halteteil trägt (18, 20), während der andere, gegenüberliegende Wippenarm als Betätigungsarm (12) zum Verschwenken der Wippe (8) ausgebildet ist.

3. Aufbewahrungsbehälter nach einem der vorangehenden Ansprüche, bei welchem die Höhe der Schlitzöffnung (6) zumindest der Dicke der Scheibe oder gegebenenfalls der Broschüre, falls diese dicker als die Scheibe ist, entspricht, wobei vorzugsweise wenigstens im Bereich eines der Enden der Schlitzöffnung (6) Stege (44) vorgesehen sind, die die Broschüre bei eingeschobener Scheibe zurückhalten und bei entnommener Scheibe freigeben.

4. Aufbewahrungsbehälter nach einem der vorangehenden Ansprüche und Anspruch 2, bei welchem das Halteteil am Haltearm (10) einen hinter eine Kante der Scheibe greifenden Haltevorsprung (18) aufweist, der in seiner von der Kante abgelegenen Richtung in eine Gleitrampe (20) übergeht, welche in Einschubrichtung für die Scheibe ansteigt.

5. Aufbewahrungsbehälter nach einem der vorangehenden Ansprüche, bei welchem die Wippe (8) in ihrer Ruhestellung kraftfrei und aus dieser gegen eine Federkraft herausbewegbar ist.

6. Aufbewahrungsbehälter nach einem der vorangehenden Ansprüche und Anspruch 2, bei welchem die Wippe (8) in einem (2) der beiden Wandteile (2, 26) als Teil von diesem ausgebildet ist, in welchem die beiden Wippenarme (10, 12) durch Trennschlitze (16) von benachbarten Wandteilabschnitten getrennt sind, während die Schwenkanordnung (14) der Wippe (8) einstückig mit dem Wandteil (2) ausgebildet ist.

7. Aufbewahrungsbehälter nach einem der vorangehenden Ansprüche und Anspruch 2, bei welchem die Länge des Haltearmes (10) etwa dem Radius der Scheibe entspricht und das Halteteil in eine Mittelöffnung der Scheibe greift.

8. Aufbewahrungsbehälter nach einem der vorangehenden Ansprüche und Anspruch 2, bei welchem die Wippe (8) zumindest im Bereich des Betätigungsarmes (12) mit Teilen eines Originalitätsverschlußes (24) ausgebildet ist, die bei Erstbenutzung nach Art einer Sollbruchstelle die Wippe (8) freigeben.

9. Aufbewahrungsbehälter nach einem der vorangehenden Ansprüche, bei welchem ein Abschlußteil (46) in die Schlitzöffnung (6) einsetzbar ist, welches in eingesetzter Stellung mit wenigsten einem Wandteil (2, 26) lösbar verbunden ist und eine Entnahme der Scheibe verhindert, wobei vorzugsweise wenigstens eine federnde Rastzunge (48) am Abschlußteil (46) und eine zugehörige Rastöffnung (54) im gegenüberliegenden Wandteil (2) vorgesehen sind und die Rastöffnung (54) eine durchgehende Bohrung aufweist, durch die ein Öffnungswerkzeug einsetzbar ist.

10. Aufbewahrungsbehälter nach Anspruch 9, bei welchem an dem Abschlußteil (46) ein alarmauslösendes Glied eines elektromagnetischen Überwachungssystems angebracht ist.
